# EUROPEAN PATENT APPLICATION

(11) **EP 2 071 569 A1**
(43) Date of publication of application: **17.06.2009**
(21) Application number: 08253951.1
(22) Date of filing: 10.12.2008
(51) Int. Cl.: G11B 7/26, G11B 7/007

(54) **Optical information recording media and method for producing the same**

(30) Priority: 12.12.2007 JP 2007320564; 31.10.2008 JP 2008281010
(71) Applicant: Taiyo Yuden Co., Ltd., Tokyo 110-0005 (JP)
(72) Inventor: Hara, Fumi , Taiyo Yuden Co.,Ltd., Tokyo,110-0005 (JP); Otsu, Takeshi , Taiyo Yuden Co.,Ltd., Tokyo,110-0005 (JP); Matsuda, Isao , Taiyo Yuden Co.,Ltd., Tokyo,110-0005 (JP); Katoh, Shingo , Taiyo Yuden Co.,Ltd., Tokyo,110-0005 (JP); Satoh, Masashi , Taiyo Yuden Co.,Ltd., Tokyo,110-0005 (JP); Shibata, Yutaka, Tokyo 110-0005 (JP)
(74) Representative: Jackson, Richard Eric

(57) **Abstract**

There is provided an optical information recording media capable of forming a BCA mark without damaging a protective layer and an optical transparency layer, and of highly reliably recording a main information. The optical information recording media contains at least an optical reflective layer, an optical recording layer, a protective layer, and an optical transparency layer formed in this order on a main surface of a substrate, and has a main-information area and a sub-information area formed inside the main-information area. An optically readable main information is recorded on the main-information area by laser beam irradiation, an optically readable mark is recorded on the sub-information area. The optical information recording media is produced by the steps of: forming at least one layer including the optical reflective layer; irradiating the sub-information area with a laser beam, thereby partly removing the at least one layer to record the mark on the area; and forming the layers above the removed layer.

## Description

### BACKGROUND OF THE INVENTION

### 1. FIELD OF THE INVENTION

The present invention relates to an optical information recording media and a method for producing the same, and more specifically to an optical information recording media having a main-information recording area for recording a main information and a sub-information recording area for recording a sub information of a bar code-shaped mark, and a method for producing the same.

### 2. DESCRIPTION OF THE RELATED ART

Recently there has been demand for optical information recording media having higher information recording density in view of recording high-definition image data. Thus, development of optical information recording media, on which information can be written using a laser beam with a shorter wavelength of 360 to 450 nm (e.g. approximately 405 nm), has been progressed. As one of such media, an optical information recording media having an optical reflective layer, a recording layer, and a 0.1-mm-thick optical transparency layer formed on an optical incidence surface side of a 1.1-mm-thick resin substrate, such as Blu-ray disc (BD-R), has been proposed. A protective layer may be formed between the recording layer and the optical transparency layer.

In this optical information recording media, a guide groove (pre-groove) is formed on the optical incidence surface of the resin substrate, the optical reflective layer and the recording layer are formed on the resin substrate, the optical transparency layer composed of an optically transparent resin is formed thereon, and the resultant media has diameter and thickness equal to those of write once type CD (CD-R) and DVD (DVD±R). Further, the protective layer composed of an optically transparent inorganic material may be formed between the recording layer and the optical transparency layer to protect the recording layer. The recording layer of this optical information recording media contains an organic substance such as a dye of an azo dye, a cyanine dye, etc. or an inorganic substance of Si, Cu, Sb, Te, Ge, etc., and a pit is formed on the recording layer by recording laser irradiation to record data.

On the optical information recording media (which may be hereinafter referred to as the optical disc), a management information such as a serial number or a lot number is recorded as a bar code-shaped mark on an optical disc to distinguish the proper manufacturer or seller.

In view of recording such identification information, a method, which contains recording a bar code-shaped mark of BCA (Burst Cutting Area), this mark being hereinafter referred to as the BCA mark, on an optical disc such as DVD-ROM, and reading the BCA mark by an optical head of an optical disc drive, has been proposed and practically used (see JP-A-2000-222743, JP-A-2006-202487, JP-A-2006-294195, and JP-A-2005-196940, etc.) In this method, a reflective layer of the disc is melted by laser irradiation to form a reflectionless part, which is shaped into a bar code having the information.

The method of using the BCA mark for recording the identification information is tested also for the optical discs using a shorter wavelength laser such as an ultraviolet laser, not only for the above described DVD-ROM. In JP-A-2006-120188, in the Blu-ray disc, a reflective layer in an area corresponding to the BCA is irradiated with a laser beam from the transparent sheet side to form a bar code recording part for producing a BCA signal.

However, the conventional BCA mark is generally recorded by irradiating the optical disc product with a laser beam, thereby carrying out the burst cutting (i.e., melting the optical reflective layer) to hole the reflective film. Therefore, in the case of using the method for the Blu-ray disc, the protective layer and the cover layer (the optical transparency layer) are significantly damaged.

An Ag-based reflective film mainly composed of Ag is used in the optical reflective layer of the Blu-ray disc or the like because of its high reflectivity to a violet laser beam. However, this reflective film has a high thermal conductivity, whereby a high-output-power laser is necessary for forming the BCA mark. Thus, the protective layer and the optical transparency layer, upper layers above the optical reflective layer, are greatly damaged.

When the thermal conductivity of the optical reflective layer is lowered or the reflective film is thinned to carry out the burst cutting under a low power, the properties and reliability of the general recording area are significantly deteriorated.

Furthermore, when the reflective layer is burst-cut after the completion of producing the optical disc, the reliability such as durability under a high-temperature and high-humidity environment is deteriorated as if a pinhole is formed on the reflective film. A material having a corrosion resistance higher than those of reflective film materials used for the DVD-ROM and the like is needed to prevent the deterioration.

With respect to the optical disc having the BCA mark, an Ag alloy for forming the reflective film that can be easily laser-marked (i.e., an Ag-based alloy having a low thermal conductivity, a low melting temperature, a high corrosion resistance, a high heat resistance, etc.) is proposed in JP-A-2006-202487 and JP-A-2006-120188. However, the Ag alloy is used only for a 2-layer-type, playback-only optical disc. Since in the case of using the optical reflective layer with a low thermal conductivity in the Blu-ray disc, the properties and reliability of the general recording area are deteriorated as described above, the Ag alloy cannot be used for the Blu-ray disc without modification.

An information recording media, which contains an information recording layer having a written bar code-shaped mark and another information recording layer, is proposed in JP-A-2005-196940. The thermal conductivity of the other information recording layer is at least 1.5 times larger than that of the information recording layer having the bar code mark. Also this media is an information recording media of playback type, which has the first information recording layer and the second information recording layer with an interlayer disposed in-between. A bar code-shaped BCA mark is recorded on the reflective film of the first information recording layer, and information is reproduced on the optical reflective layer of the second information recording layer.

A process for forming a bar code, using not burst cutting but masking-sputtering, is proposed in JP-A-2006-120188. However, this publication relates to a conventional optical disc such as the DVD-ROM having only the reflective layer on the substrate. Further, the mask is applied in a width of several tens µm, and thus is readily buried in continuous production, so that the mask has to be frequently exchanged and cannot be practically used.

As described above, a highly reliable optical Blu-ray disc, free from damages in a protective layer and a cover layer, and holes formed by removing a reflective layer, has not been obtained.

### SUMMARY OF THE INVENTION

An object of the present invention is to solve the above problems of the optical discs such as the Blu-ray disc, thereby providing a highly reliable optical disc that exhibits excellent recording characteristic with little noises in electric signals, and is free from holes in the layers.

As a result of intense research in view of the above object, the inventors have found that the problems can be solved by using a method containing the steps of forming an optical reflective layer (or an optical reflective layer and an optical recording layer), melt-removing the optical reflective layer (or the optical reflective layer and the optical recording layer) in a bar code shape to record a bar code-shaped BCA mark, and forming the upper layers (the optical recording layer, a protective layer, an optical transparency layer, etc.) thereon, not using the conventional method of recording a BCA mark after the completion of optical disc production.

The invention has been accomplished based on this finding. According to the invention, there are provided the following media and method.
(1) An optical information recording media comprising at least an optical reflective layer, an optical recording layer, a protective layer, and an optical transparency layer formed in this order on a main surface of a substrate, wherein
   the main surface has a main-information area and a sub-information area formed inside the main-information area, an optically readable main information is recorded on the main-information area by laser beam irradiation, an optically readable mark is recorded on the sub-information area, and
   in the mark on the sub-information area, at least one layer including the optical reflective layer is removed, and thereby only the layers above the removed layer are formed.
(2) An optical information recording media according to (1), wherein only the optical reflective layer is removed in the mark.
(3) An optical information recording media according to (1), wherein the optical reflective layer and the optical recording layer are removed in the mark.
(4) An optical information recording media according to any one of (1) to (3), wherein the mark has a bar code shape.
(5) A method for producing an optical information recording media comprising at least an optical reflective layer, an optical recording layer, a protective layer, and an optical transparency layer formed in this order on a main surface of a substrate, wherein
   the optical information recording media has a main-information area and a sub-information area formed inside the main-information area, an optically readable main information is recorded on the main-information area by laser beam irradiation, an optically readable mark is recorded on the sub-information area, and
   the method comprises the steps of: forming at least one layer including the optical reflective layer; irradiating the sub-information area with a laser beam, thereby partly removing the at least one layer to record the mark on the area; and forming the layers above the removed layer.
(6) A method according to (5), comprising the steps of: forming the optical reflective layer; irradiating the sub-information area with the laser beam, thereby partly removing the optical reflective layer to record the mark on the area; and forming the layers above the optical reflective layer.
(7) A method according to (5), comprising the steps of: forming the optical reflective layer and the optical recording layer; irradiating the sub-information area with the laser beam, thereby partly removing the optical reflective layer and the optical recording layer to record the mark on the area; and forming the layers above the optical recording layer.
(8) A method according to any one of (5) to (7), wherein the mark is formed in a bar code shape.

In the invention, the mark can be recorded without damaging the protective layer, the optical transparency layer, and the like, whereby the main information can be recorded on the main-information area with excellent record signal characteristic without electric signal noises. In the invention, a part of the optical reflective layer (or the optical reflective layer and the optical recording layer) is melted and removed, the optical recording layer or the protective layer is formed on the part, and the protective layer or the optical transparency layer is further formed thereon. Thus, holes and cavities are not formed above the part, and the resultant media has a high reliability with a high durability under a high-temperature and high-humidity environment.

### BRIEF DESCRIPTION OF THE DRAWINGS

FIG. 1 is a plan view showing the overall structure of an optical information recording media according to the present invention;
FIG. 2 is a partly enlarged cross-sectional view showing the internal structure of an area surrounded by a dashed line in the optical information recording media of FIG. 1;
FIG. 3 is a schematic view showing a BCA mark in a conventional optical information recording media;
FIG. 4 is a schematic view showing a process of forming a BCA mark in an optical information recording media according to the invention;
FIG. 5 is a schematic view showing another process of forming a BCA mark in an optical information recording media according to the invention;
FIG. 6 is microphotograph of a BCA mark part of an optical information recording media obtained in Example 1;
FIG. 7 is an oscilloscope photograph of an electric signal in the BCA mark part of the optical information recording media obtained in Example 1;
FIG. 8 is microphotograph of a BCA mark part of an optical information recording media obtained in Example 2;
FIG. 9 is an oscilloscope photograph of an electric signal in the BCA mark part of the optical information recording media obtained in Example 2;
FIG. 10 is microphotograph of a BCA mark part of an optical information recording media obtained in Comparative Example; and
FIG. 11 is an oscilloscope photograph of an electric signal in the BCA mark part of the optical information recording media obtained in Comparative Example.

### DESCRIPTION OF THE PREFERRED EMBODIMENTS

The optical information recording media of the present invention will be described below with reference to the drawings.

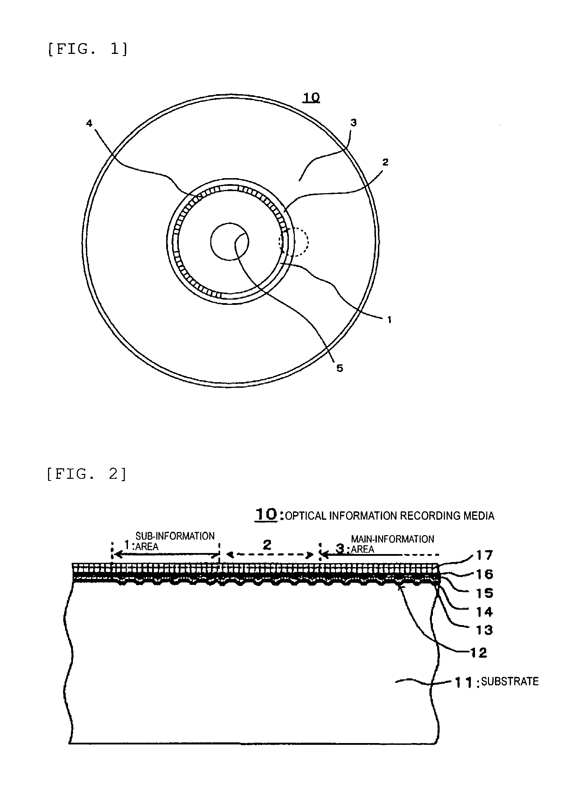

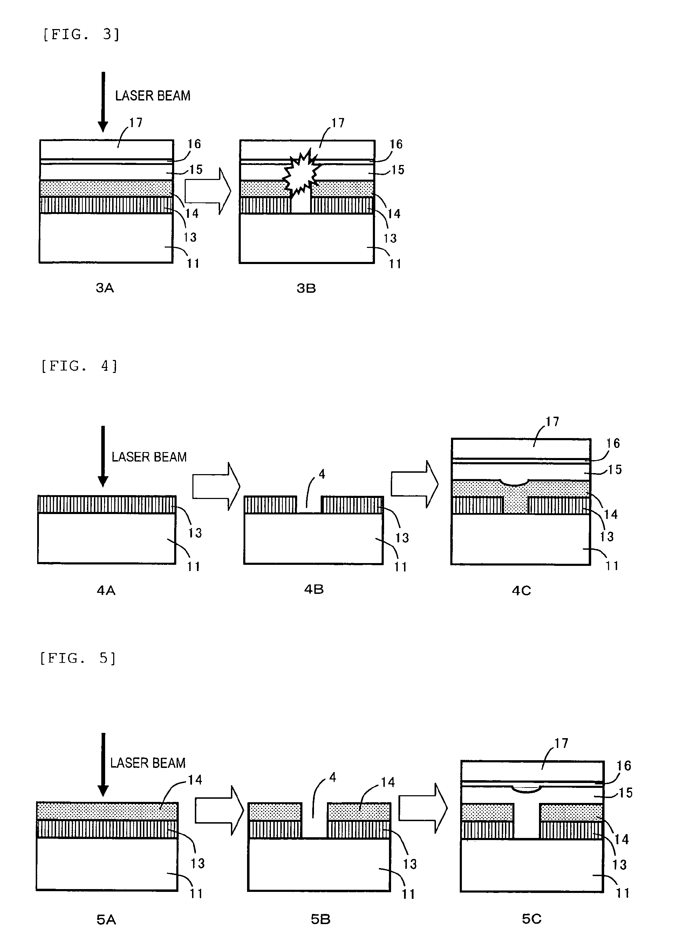

FIG. 1 is a plan view schematically showing an optical information recording media 10 according to an embodiment of the invention. FIG. 2 is a partly enlarged cross-sectional view showing an area surrounded by a dashed line in FIG. 1 for explaining an internal structure of the optical information recording media 10, FIG. 3 is a partly enlarged cross-sectional view for explaining a conventional sub-information area, and each of FIGS. 4 and 5 is a partly enlarged cross-sectional view for explaining a sub-information area according to the invention.

As shown in FIG. 1, the optical disc 10 of this embodiment has a center hole 5, and has a disc-shaped appearance with an outer diameter of approximately 120 mm, an inner diameter of approximately 15 mm, and a thickness of approximately 1.2 mm. A sub-information area 1 is formed on one main surface of the optical disc 10 in a region of 21.0 to 22.1 mm from the center of the center hole 5. A part having an optical reflective layer and a part not having the layer are disposed in the area 1 to form a bar code-shaped BCA mark 4. A main-information area 3 is formed outside the area 1 in a region of 23.0 to 58.5 mm from the center. An intermediate range 2 is disposed between the sub-information area 1 and the main-information recording area 3 in a region of 22.1 to 23.0 mm from the center. The purpose of the intermediate range 2 is not limited, and the intermediate range 2 may be used as a freely usable area according to user's demand or a playback-only area. Specifically, for example, the intermediate range 2 may be used as a mirror area without grooves or an HFM area with grooves.

As shown in FIG. 2, the internal structure of the area surrounded by the dashed line in the optical disc 10 of FIG. 1 contains a disk-shaped substrate 11 having a thickness of approximately 1.1 mm, and spiral-shaped grooves 12 are formed on one main surface of the substrate 11. Further, an optical reflective layer 13 capable of reflecting a laser beam to be hereinafter described, an optical recording layer 14 mainly composed of a photoabsorption material of an organic dye capable of absorbing a laser beam, a protective layer 15, an optional adhesive layer 16, and an optical transparency layer 17 having a thickness of approximately 0.1 mm are formed on this main surface in this order.

The main-information area 3 is irradiated with a laser beam having a wavelength of 400 to 420 nm (e.g. 405 nm) based on a recorded information, whereby an optically readable main information is recorded on the optical recording layer 14. The sub-information area 1 is disposed inside the main-information area 3, and a sub information of the BCA mark 4, different from the main information, is recorded in the sub-information area 1.

The sub information such as a media-specific information is recorded in the sub-information area 1. The sub-information area 1 is irradiated with a laser beam having a wavelength of 800 to 820 nm (e.g. 810 nm) to partly melt-remove the optical reflective layer, whereby the part having the reflective layer and the part not having the reflective layer are formed on the circumference to form the bar code-shaped BCA mark 4.

FIG. 3 is a partly enlarged view showing a part of the conventional sub-information area 1.

As shown in FIGS. 3A and 3B, in a conventional BCA mark forming method, an optical disc having all layers is irradiated with a high-power laser beam to form a BCA mark immediately before obtaining a final product. Thus, the resultant hole may reach a protective layer 15 or an optical transparency layer 17 above a part 4 with an optical reflective film 13 removed.

In contrast, as shown in FIGS. 4A, 4B, and 4C, in the optical disc 10 of the invention, the optical recording layer 14 may be formed in the part 4 with the BCA mark written (i.e. the part not having the optical reflective layer 13), and the protective layer 15, the optical transparency layer 17, and the like may be formed thereon.

In the production of the optical disc 10 of this embodiment, after the optical reflective layer 13 is formed on the substrate 11, the sub-information area is partly irradiated with a laser beam to form the BCA mark 4 (i.e. the part not having the optical reflective layer 13) before forming the other upper layers. Then, the optical recording layer 14, the protective layer 15, and the optical transparency layer 17 are formed also in the part 4 not having the optical reflective layer. Thus, the protective layer 15 and the optical transparency layer 17 are not damaged in the process of forming the BCA mark. Furthermore, the optical reflective layer is finely removed to form the BCA mark 4, so that the resultant BCA mark can be perfectly read and hardly affects writing and reading on the main-information area.

As shown in FIG. 5, in the optical disc 10 of the invention, the protective layer 15 may be formed in the part 4 with the BCA mark written (i.e. the part not having the optical reflective layer 13 and the optical recording layer), and the optical transparency layer 17 may be formed thereon. The optical disc 10 of this embodiment can exhibit advantageous effects equal to those of FIG. 4.

In the production of the optical disc 10 of this embodiment, after the optical reflective layer 13 and the optical recording layer 14 are formed on the substrate 11 as shown in FIG. 5A, the sub-information area is partly irradiated with a laser beam to form the BCA mark 4 (i.e. the part not having the optical reflective layer 13 and the optical recording layer 14) as shown in FIG. 5B before forming the other upper layers. Then, the protective layer 15 and the optical transparency layer 17 are formed also in the part 4 not having the optical reflective layer 13 and the optical recording layer 14. Thus, the optical transparency layer 17 is not damaged in the process of forming the BCA mark. In the case of using a 0.1-mm-thick optical transparency sheet for the optical transparency layer 17, the protective layer 15 is coated with the adhesive layer 16, and then the optical transparency layer 17 is attached thereto. In this case, the protective layer 15 and the optical transparency layer 17 are not damaged in the process of forming the BCA mark. The resultant BCA mark can be perfectly read and hardly affects writing and reading on the main-information area, as well as the embodiment of FIG. 4.

In the invention, the substrate 11 may comprise a material selected from various known substrate materials for conventional optical information recording media. Specific examples of the materials include polycarbonates; acrylic resins such as polymethyl methacrylates; vinyl chloride-based resins such as polyvinyl chlorides and vinyl chloride copolymers; epoxy resins; amorphous polyolefins; polyester resins; metals such as aluminum; and glasses. The materials may be used in combination if necessary. Among the materials, the thermoplastic resins are preferred, and the polycarbonates are particularly preferred, in view of moldability, moisture resistance, dimensional stability, low cost, etc.

The above resin is preferably formed to a predetermined shape by injection molding, etc. to form the substrate 11. For example, in the case of producing an optical disc, the substrate 11 preferably has a disc shape. The substrate 11 preferably has a thickness of 0.9 to 1.1 mm. The substrate 11 is not limited to this embodiment, and for example the substrate 11 may be obtained by the steps of applying an ultraviolet stiffening resin to a base, and hardening the applied resin.

In the invention, it is preferred that the spiral-shaped grooves 12 are formed on both the inside sub-information area 1 and the outside main-information area 3 on the main surface of the substrate 11.

In the injection molding for forming the substrate 11, it is preferred that a template (a so-called stamper) is placed in a metal mold. A spiral-shaped convex portion having a reverse-pattern to the grooves 12 is micro-processed on one main surface of the stamper. By using the stamper, the grooves 12 can be simultaneously formed in the injection molding of the substrate 11.

In the invention, the optical reflective layer 13 is for reflecting a laser beam for data recording and/or playback. The optical reflective layer 13 is formed between the substrate 11 and the optical recording layer 14 to increase the reflectivity for the laser beam or to improve the recording and playback characteristic. The optical reflective layer 13 may be formed on the surface having the grooves 12 of the substrate 11 by a deposition method, an ion plating method, a sputtering method, etc. Among the methods, the sputtering method is particularly preferred from the viewpoints of mass productivity and cost.

The optical reflective layer 13 may be composed of a common material preferably used for the Blu-ray disc. The optical reflective layer 13 is preferably a metallic film, and preferred materials thereof include metals such as Au, Al, Ag, Cu, and Pd, alloys of the metals, and alloys of the metals doped with a trace component.

In the invention, after the optical reflective layer 13 is formed, the BCA mark is formed in the sub-information area 1. The BCA mark is formed into a bar code shape around the center hole of the disc by partly irradiating the sub-information area 1 with a laser beam.

After the BCA mark is formed in the sub-information area 1 of the optical reflective layer 13, the optical recording layer 14 is formed thereon.

The optical recording layer 14 preferably comprises a photoabsorption material containing an organic dye capable of absorbing a laser beam. The optical recording layer 14 is particularly preferably such a dye type optical recording layer that a pit is formed to record data under laser beam irradiation. The organic dye is preferably a phthalocyanine dye, a cyanine dye, or an azo dye, etc. For example, the optical recording layer 14 is preferably formed by the steps of: dissolving an azo dye represented by the following chemical formula 1 or a cyanine dye represented by the following chemical formula 2 together with a binder or the like in a solvent such as TFP (tetrafluoropropanol) to prepare a coating liquid; applying the coating liquid to the optical reflective layer using a spin coat method, a screen printing method, or the like to form a coating layer; and drying the coating layer e.g. at 80°C for 30 minutes.

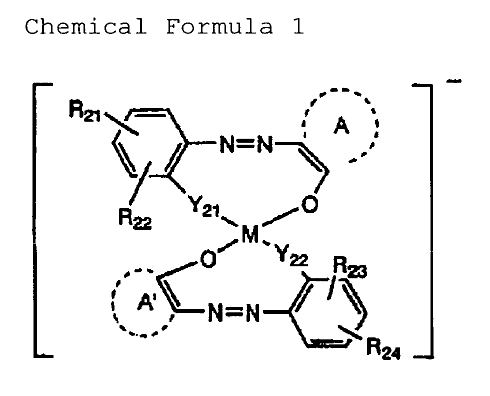

In the formula, A and A' represent the same or different heterocycles containing one or more heteroatoms selected from nitrogen, oxygen, sulfur, selenium, and tellurium atoms, R₂₁ to R₂₄ independently represent a hydrogen atom or a substitution radical, and Y₂₁ and Y₂₂ represent the same or different heteroatoms selected from Group 16 atoms of the periodic table.

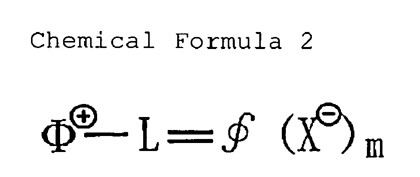

In the formula, Φ⁺ and φ independently represent an indolenine ring residue, a benzoindolenine ring residue, or a dibenzoindolenine ring residue, L represents a connecting group for forming a mono- or di-carbocyanine dye, X⁻ represents a negative ion, and m is an integer of 0 or 1.

In the invention, it is preferred that the protective layer 15 is formed between the optical recording layer 14 and the optical transparency layer 17 for the purpose of controlling the recording characteristic, improving the adhesiveness, protecting the optical recording layer 14, etc.

The protective layer 15 preferably comprises a transparent film containing SiO₂, ZnS-SiO₂, Nb₂O₅-Al₂O₃, etc. The protective layer 15 is preferably formed on the optical recording layer 14 by a deposition method, an ion plating method, a sputtering method, etc. Among the methods, the sputtering method is particularly preferred from the viewpoints of mass productivity and cost.

In the invention, the adhesive layer 16 is optionally formed to improve the adhesion between the protective layer 15 and the sheet-shaped transparent layer 17 to be described below.

The adhesive layer 16 preferably comprises a transparent reactive stiffening resin or a transparent ultraviolet stiffening resin such as an epoxy resin as a main component. The adhesive layer 16 is applied to the protective layer 15 and/or the lower surface of the sheet-shaped optical transparency layer 17 having a thickness of approximately 0.1 mm by a spin coat method, a screen printing method, etc. After applying the adhesive layer 16, the protective layer 15 on the substrate 11 and the sheet-shaped optical transparency layer 17 are bonded by the adhesive layer 16, to obtain a disc-shaped optical information recording media having a thickness of approximately 1.2 mm.

In the invention, the optical transparency layer 17 preferably comprises a transparent resin. More specifically, for example, it is preferred that a sheet containing a resin excellent in optical transparency such as a polycarbonate resin or an acrylic resin is used as the optical transparency layer, or alternatively the resin is applied to form the optical transparency layer.

In general, it is preferred that the optical transparency layer 17 has a thickness of 0.1 mm in view of recording and/or reading data on the optical recording layer 14 by irradiation with a laser beam having a wavelength of approximately 400 to 420 nm.

Specific examples of methods for forming the optical transparency layer 17 are described below. The formation is not limited to the following methods.
(a) An ultraviolet stiffening adhesive mainly composed of an acrylic resin is applied to the protective layer on the substrate, a 0.1-mm-thick disc-shaped polycarbonate resin sheet is placed thereon, and the adhesive is hardened by ultraviolet irradiation, to obtain a disc-shaped optical information recording media having a thickness of approximately 1.2 mm.
(b) An optical transparency layer of a 0.1-mm-thick polycarbonate sheet is bonded to the protective layer on the substrate using a transparent adhesive, to obtain a disc-shaped optical information recording media having a thickness of approximately 1.2 mm.
(c) A resin mainly composed of an acrylic resin is applied by a spin coat method to the protective layer on the substrate, and the resin is hardened by ultraviolet, whereby a 0.1-mm-thick cover layer is formed, to obtain a disc-shaped optical information recording media having a thickness of approximately 1.2 mm.

### EXAMPLES

The present invention will be described in more detail below with reference to Examples and Comparative Example without intention of restricting the scope of the invention.

### (Example 1)

### <Production of substrate>

A photoresist (a photosensitizer) was applied to a glass original board to a predetermined thickness by a spin coat method to form a resist film. The resist film was exposed to a laser beam from a cutting device into a predetermined exposure width size. A developer was dropped onto the resultant glass original board, and a developing treatment was carried out to form an uneven resist pattern corresponding to grooves of a substrate for a disc-shaped optical information recording media.

Nickel was deposited on the glass original board by a plating treatment, and the plated layer was peeled off and trimmed into a disc shape to obtain a stamper.

The stamper was set in a cavity of an injection molding device, and a polycarbonate resin was injected into the cavity, to obtain a substrate 11 having spiral-shaped grooves on one main surface.

### <Formation of optical reflective layer>

An Ag alloy was uniformly sputtered onto the main surface having the spiral-shaped grooves 12 by a sputtering device using an Ag alloy having a composition of Ag-0.5Bi-0.7Nd-6.0Sn (at%) as a target material, to form a 60-nm-thick optical reflective layer 13.

### <Formation of BCA mark>

Then, a BCA mark 4 having a width of 10 µm in the circumferential direction was formed in a sub-information area 1 for the optical information recording media, using a BCA cutting device having a laser wavelength of 810 nm and an ellipse-shaped beam diameter of approximately 0.85 µm x approximately 35 µm, under conditions of a laser bias power of 200 mW, a cutting speed of 1000 rpm, a radial-direction beam feed of 6 µm, a record-starting position of 21.0 mm, and a record finishing position of 22.0 mm.

### <Formation of recording layer, protective layer, and optical transparency layer>

A dye solution containing an organic azo dye represented by the above chemical formula 1 was applied to a thickness of 60 nm onto the substrate having the BCA mark 4 by a spin coat method.

Then, ZnS-SiO₂ was sputtered onto the resultant substrate using a sputtering device, to form a 25-nm-thick protective film 15.

Further, an ultraviolet stiffening adhesive mainly composed of an acrylic resin was applied to the resultant substrate to form the adhesive layer 16. A 0.1-mm-thick disc-shaped polycarbonate resin sheet was stacked thereon, and the adhesive was hardened by ultraviolet irradiation to form an optical transparency layer 17, whereby a disc-shaped optical disc having a thickness of approximately 1.2 mm was obtained.

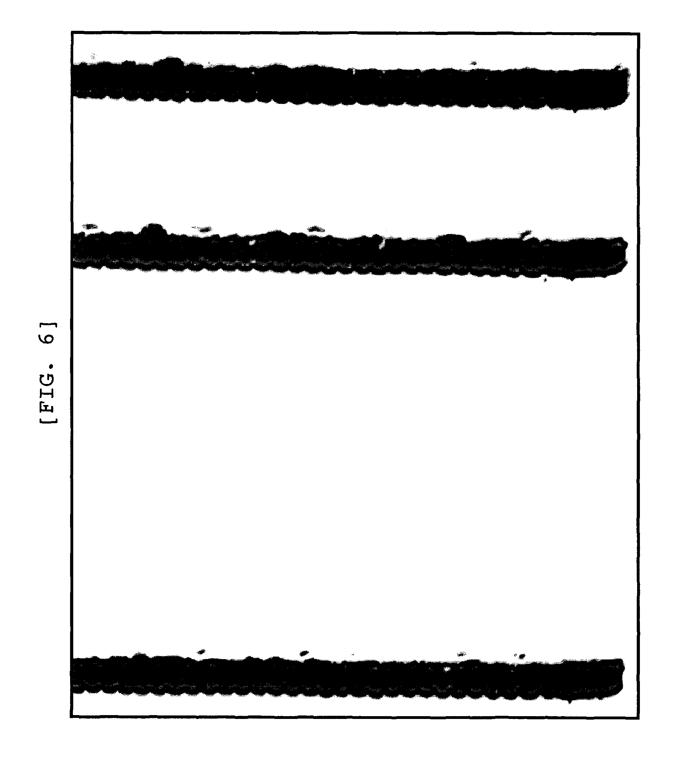

The BCA mark part of the obtained optical disc was observed using an optical microscope at approximately 300-fold magnification. The result is shown in FIG. 6.

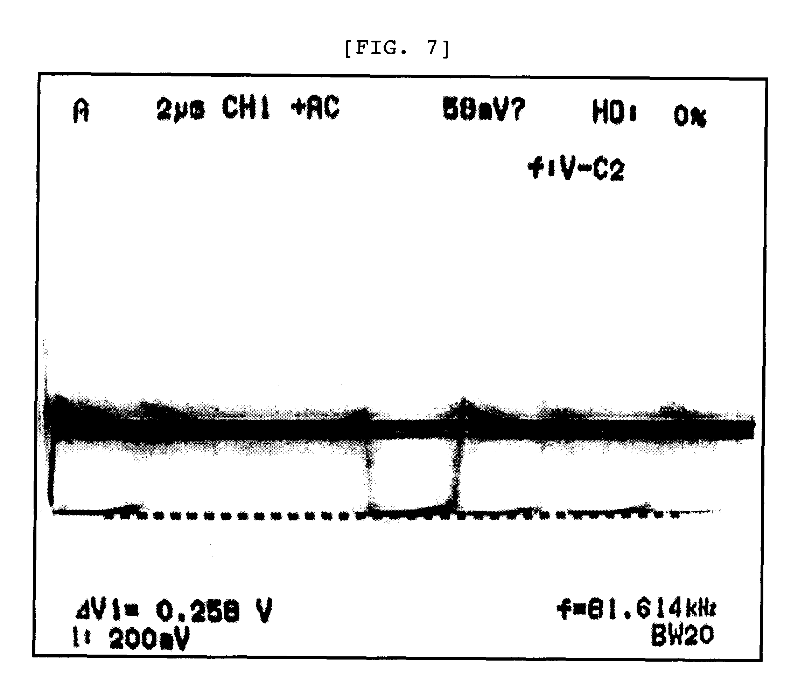

FIG. 7 is an image of electronic signal measured in the BCA mark part of the obtained optical disc. This image was obtained using a recording/playback apparatus (ODU-1000) manufactured by Pulsetec Co., Ltd. such that a pickup is moved to the BCA mark part at a linear velocity of 4.92 m/s and focused, and the signal in the BCA mark part was converted to the image by an oscilloscope. In this image, the electric signal amplitude strength is shown on the vertical axis, and the scanning distance is shown on the horizontal axis. The result of scanning in the radial direction across the bar code is shown in the image, and U-shaped signals correspond to the BCA mark part.

As shown in the drawings, in the obtained optical disc, noise was observed only slightly in a burst cutting edge, and the electric signal was at the ground level without noises in the BCA mark bottom. Thus, it is clear that the optical reflective film was perfectly removed in the hole.

### (Example 2)

An optical disc was produced in the same manner as Example 1 except that the BCA mark 4 was formed after disposing the optical reflective layer 13 and the optical recording layer 14.

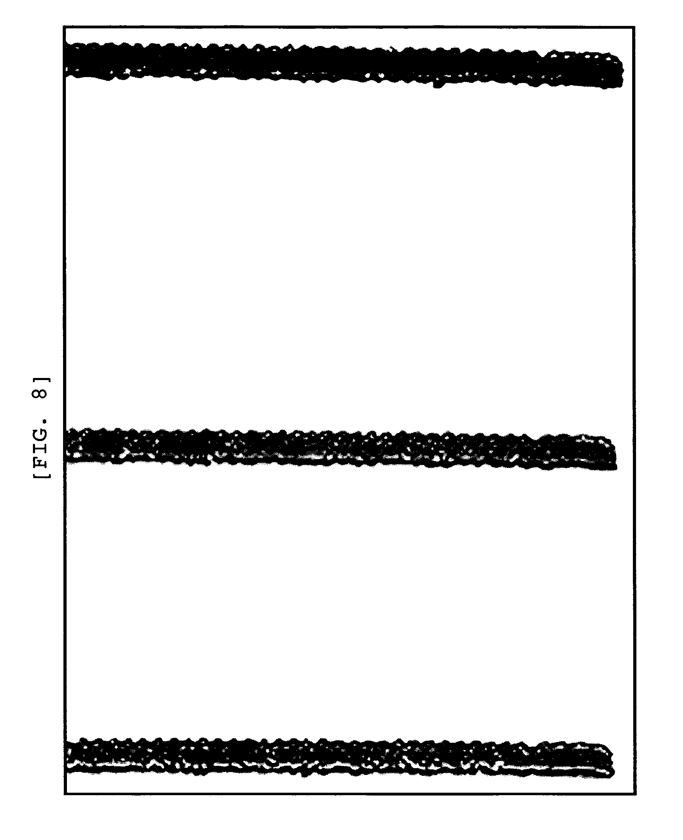

The BCA mark part of the optical disc was observed using an optical microscope at approximately 300-fold magnification. The result is shown in FIG. 8.

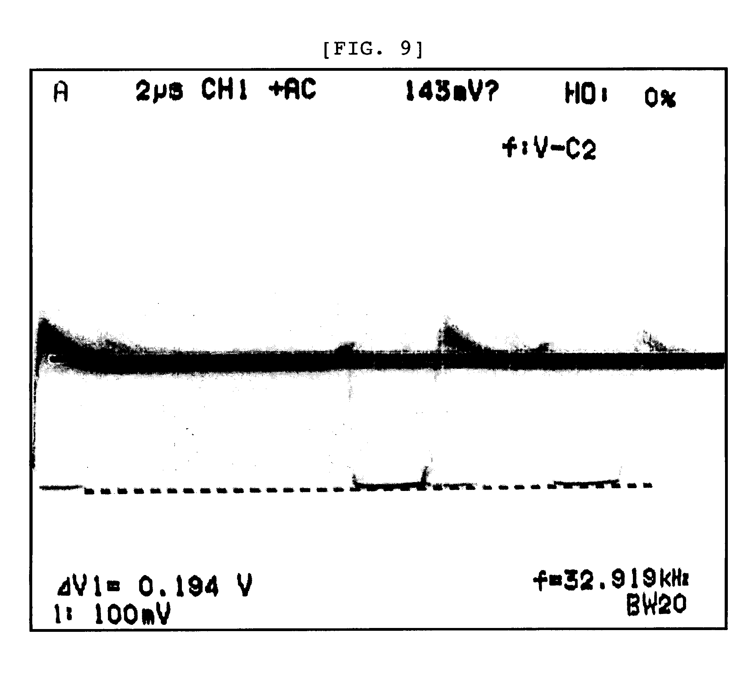

FIG. 9 is an image of electronic signal measured in the BCA mark part 4 with the optical reflective layer 13 and the optical recording layer 14 removed. This image was obtained in the same manner as Example 1, and thus explanations therefor are omitted.

As shown in the drawings, in the obtained optical disc 10, noise was observed only slightly in a burst cutting edge, and the electric signal was at the ground level without noises in the BCA mark bottom. Thus, it is clear that the optical reflective film and the optical recording layer were perfectly removed in the hole in the same manner as Example 1.

### (Comparative Example)

An optical disc was produced in the same manner as Example 1 except that the BCA mark was formed after the disc formation.

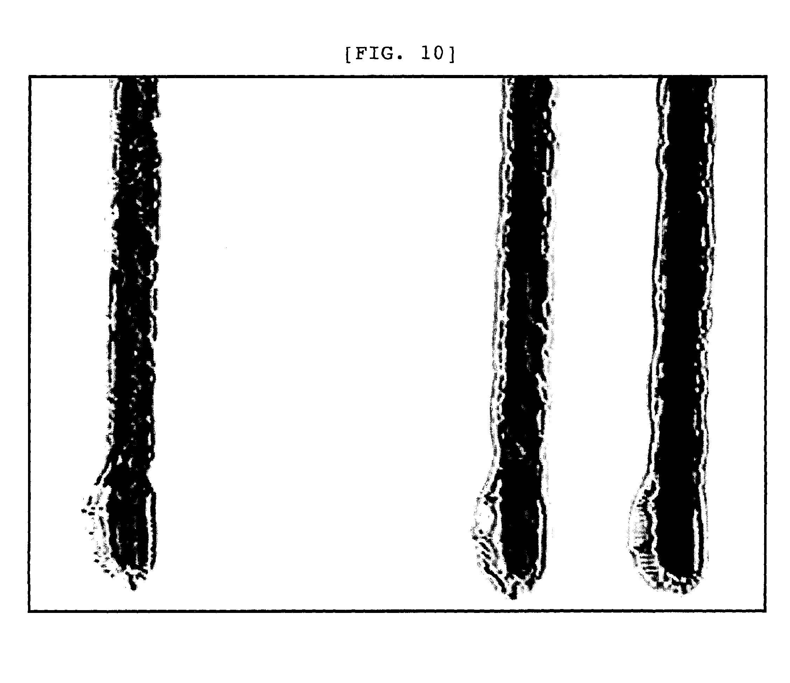

The BCA mark part of the optical disc was observed using an optical microscope at the above magnification. The result is shown in FIG. 10.

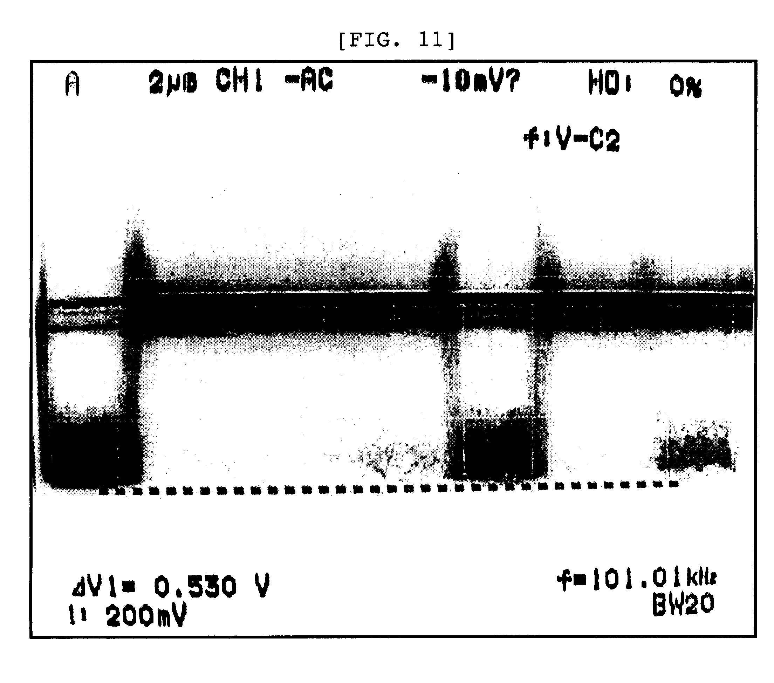

FIG. 11 is an image of an electric signal amplitude strength measured in the BCA mark part of the optical disc in the same manner as FIG. 7.

As shown in the drawings, the boundary of a hole was unclear in a burst cutting edge of FIG. 10, large noises were observed in the measured electric signal amplitude strength of FIG. 11, and thus the groove was not perfectly formed. Particularly, large noises were observed also in the BCA mark bottom. Thus, it is clear that the optical reflective film cannot be perfectly removed in the hole.

As shown in the comparison of Examples 1 and 2, the BCA mark can be perfectly written by using the structure and producing method of the invention. The optical recording layer 14 or the protective layer 15 can be formed on the BCA mark part with the optical reflective layer removed, as well as the other areas, and the protective layer, the optical transparency layer, and the like can be formed on the optical reflective layer. Thus, holes and cavities are not formed on and around the BCA mark with the optical reflective layer 13 removed. Therefore, the optical discs 10 of Examples are hardly changed with time and are more excellent in durability under high-temperature and high-humidity environment than the optical disc of Comparative Example.

## Claims

1. An optical information recording media comprising at least an optical reflective layer, an optical recording layer, a protective layer, and an optical transparency layer formed in this order on a main surface of a substrate, wherein
the main surface has a main-information area and a sub-information area formed inside the main-information area, an optically readable main information is recorded on the main-information area by laser beam irradiation, an optically readable mark is recorded on the sub-information area, and
in the mark on the sub-information area, at least one layer including the optical reflective layer is removed, and thereby only the layers above the removed layer are formed.

2. An optical information recording media according to claim 1, wherein only the optical reflective layer is removed in the mark.

3. An optical information recording media according to claim 1, wherein the optical reflective layer and the optical recording layer are removed in the mark.

4. An optical information recording media according to any one of claims 1 to 3, wherein the mark has a bar code shape.

5. A method for producing an optical information recording media comprising at least an optical reflective layer, an optical recording layer, a protective layer, and an optical transparency layer formed in this order on a main surface of a substrate, wherein
the optical information recording media has a main-information area and a sub-information area formed inside the main-information area, an optically readable main information is recorded on the main-information area by laser beam irradiation, an optically readable mark is recorded on the sub-information area, and
the method comprises the steps of: forming at least one layer including the optical reflective layer; irradiating the sub-information area with a laser beam, thereby partly removing the at least one layer to record the mark on the area; and forming the layers above the removed layer.

6. A method according to claim 5, comprising the steps of: forming the optical reflective layer; irradiating the sub-information area with the laser beam, thereby partly removing the optical reflective layer to record the mark on the area; and forming the layers above the optical reflective layer.

7. A method according to claim 5, comprising the steps of: forming the optical reflective layer and the optical recording layer; irradiating the sub-information area with the laser beam, thereby partly removing the optical reflective layer and the optical recording layer to record the mark on the area; and forming the layers above the optical recording layer.

8. A method according to any one of claims 5 to 7, wherein the mark is formed in a bar code shape.
